# FASCICULE DE BREVET EUROPEEN

(11) **EP 2 923 621 B1**
(45) Date de publication et mention de la délivrance du brevet: **20.06.2018**
(21) Numéro de dépôt: 15160372.7
(22) Date de dépôt: 23.03.2015
(51) Int. Cl.: A47J 43/07

(54) **APPAREIL ÉLECTROMÉNAGER DE PRÉPARATION CULINAIRE COMPRENANT UN RECIPIENT FERMÉ PAR UN COUVERCLE AMOVIBLE COOPERANT AVEC UN DISPOSITIF DE SÉCURITÉ**
ELEKTROHAUSHALTSGERÄT ZUR ESSENSZUBEREITUNG, DAS EINEN BEHÄLTER UMFASST, DER MIT EINEM ABNEHMBAREN DECKEL VERSCHLOSSEN IST, DER MIT EINER SICHERHEITSVORRICHTUNG KOMBINIERT IST
HOUSEHOLD ELECTRICAL APPLIANCE FOR FOOD PREPARATION COMPRISING A CONTAINER CLOSED BY A REMOVABLE COVER ENGAGING WITH A SAFETY DEVICE

(30) Priorité: 25.03.2014 FR 1452490
(43) Date de publication de la demande: 30.09.2015
(73) Titulaire: SEB S.A., 69130 Ecully (FR)
(72) Inventeur: Hamelin, Franck, 50490 Saint-Sauveur-Lendelin (FR); Lamballe, Alexandre, 53100 Mayenne (FR); Lemercier, Michel, 53250 Javron-les-Chapelles (FR)
(74) Mandataire: Bourrières, Patrice

(56) Documents cités:
- WO-A1-00/19878
- DE-A1- 3 319 513
- FR-A5- 2 147 361

## Description

La présente invention se rapporte au domaine technique général des appareils électroménagers de préparation culinaire comportant un récipient recevant un outil de travail entraîné en rotation par un moteur et un couvercle venant fermer de manière amovible le récipient, le récipient comportant un élément de détection coopérant avec un dispositif de sécurité pour interdire le fonctionnement du moteur lorsque le couvercle n'est pas verrouillé sur le récipient, et se rapporte plus particulièrement à un appareil électroménager de préparation culinaire dans lequel l'élément de détection est mobile entre une position de repos vers laquelle il est amené par des moyens de rappel et une position de fonctionnement vers laquelle il est amené par un organe d'actionnement porté par le couvercle lorsque ce dernier est verrouillé sur le récipient.

Il est connu, de la demande de brevet FR 2 147 361, un appareil de préparation culinaire comportant un récipient renfermant un outil de travail entraîné en rotation par un moteur, le récipient étant fermé par un couvercle amovible. Pour éviter le fonctionnement du moteur en l'absence du couvercle, le couvercle est muni d'une patte de sécurité qui fait saillie latéralement au couvercle et vient actionner, par l'intermédiaire d'une tige de transmission portée par le récipient, un interrupteur de sécurité intégré dans le boîtier moteur de l'appareil.

Un appareil muni d'un tel dispositif présente l'avantage d'une grande sécurité d'utilisation en empêchant le fonctionnement du moteur en l'absence du couvercle.

Cependant, le couvercle équipant un tel appareil présente l'inconvénient d'être fragile au niveau de la patte de sécurité, cette dernière pouvant se casser lors de la chute du couvercle, avec pour conséquence l'impossibilité d'utiliser l'appareil. Ainsi, la casse de la patte de sécurité du couvercle est à l'origine de nombreux retours en service après-vente.

Il est connu du document WO00/19878 d'avoir un couvercle avec une jupe périphérique comprenant une paroi interne venant en regard de la paroi externe du récipient et de placer la patte de sécurité sur la paroi interne du récipient. Cependant, dans ce document, la patte de sécurité est spécifique et distincte des éléments assurant le verrouillage du couvercle de sorte que sa réalisation engendre en coût supplémentaire.

Aussi, un but de la présente invention est de remédier à ces inconvénients en proposant un appareil de préparation culinaire comportant un dispositif de sécurité empêchant le fonctionnement de l'appareil en l'absence du couvercle qui soit à la fois simple et économique à réaliser et d'une plus grande robustesse.

A cet effet, l'invention se rapporte à un appareil électroménager de préparation culinaire comportant un récipient recevant un outil de travail entraîné en rotation par un moteur et un couvercle venant fermer de manière amovible le récipient, le récipient comportant un élément de détection coopérant avec un dispositif de sécurité empêchant le fonctionnement du moteur lorsque le couvercle n'est pas verrouillé sur le récipient, l'élément de détection étant mobile entre une position de repos vers laquelle il est amené par des moyens de rappel et une position de fonctionnement vers laquelle il est amené par un organe d'actionnement porté par le couvercle lorsque ce dernier est verrouillé sur le récipient, caractérisé en ce que le couvercle comporte une jupe périphérique s'étendant sur toute la circonférence du couvercle, la jupe comportant une paroi interne venant en regard d'une paroi externe du récipient lorsque le couvercle ferme le récipient, et en ce que l'organe d'actionnement fait saillie sur la paroi interne de la jupe du couvercle.

Un tel appareil présente l'avantage de posséder un organe d'actionnement qui fait saillie vers l'intérieur du couvercle de sorte que l'organe d'actionnement est protégé par la jupe du couvercle en cas de chute du couvercle. On obtient ainsi un appareil dans lequel le risque de casse de l'organe d'actionnement est fortement diminué.

Selon une autre caractéristique de l'invention, le couvercle est verrouillé par rotation sur le récipient, par exemple par une liaison de type baïonnette.

Un tel verrouillage par rotation du couvercle présente l'avantage d'être simple et ergonomique.

Selon une autre caractéristique de l'invention, la paroi interne de la jupe du couvercle comporte au moins deux éléments de verrouillage venant coopérer avec au moins deux éléments de verrouillage complémentaires ménagés sur la paroi externe du récipient pour former la liaison baïonnette, l'organe d'actionnement étant constitué par l'un des éléments de verrouillage.

Une telle caractéristique présente l'avantage d'assurer une bonne tenue du couvercle sur le récipient. De plus, le couvercle ainsi réalisé présente l'avantage de posséder un élément de verrouillage ayant à la fois pour fonction d'assurer la tenue du couvercle sur le récipient et d'agir, tel un organe d'actionnement, sur l'élément de détection du dispositif de sécurité, de sorte que la fiabilité de ces deux fonctions peut être assurée de manière économique en réalisant un élément de verrouillage robuste.

Selon une autre caractéristique de l'invention, les éléments de verrouillage sont régulièrement répartis sur la jupe périphérique du couvercle de telle sorte que le couvercle puisse être verrouillé sur le récipient selon plusieurs orientations, chaque élément de verrouillage du couvercle présentant une forme adaptée pour agir sur l'élément de détection et le déplacer vers la position de fonctionnement lorsqu'il se trouve en regard de ce dernier lors de la fermeture du couvercle.

Une telle caractéristique présente l'avantage de permettre le verrouillage du couvercle sur le récipient selon plusieurs orientations, en assurant toujours l'activation du dispositif de sécurité, pour une plus grande ergonomie d'utilisation de l'appareil.

Selon une autre caractéristique de l'invention, le couvercle comporte au moins quatre éléments de verrouillage et préférentiellement six éléments de verrouillage.

Une telle caractéristique permet d'offrir au moins quatre orientations possibles de verrouillage et préférentiellement six, pour une plus grande ergonomie d'utilisation.

Selon une autre caractéristique de l'invention, le récipient comporte une poignée comprenant une embase venant se fixer le long de la paroi externe du récipient, l'élément de détection étant constitué par une tige de détection montée mobile en translation dans l'embase de la poignée.

Une telle caractéristique permet d'obtenir une bonne intégration de l'élément de détection dans la poignée pour une meilleure fiabilité du dispositif de sécurité.

Selon une autre caractéristique de l'invention, le récipient comporte un élément de verrouillage complémentaire à proximité de la poignée.

Selon une autre caractéristique de l'invention, le récipient comporte un élément de verrouillage complémentaire s'étendant en regard de la tige de détection, ledit élément de verrouillage complémentaire comprenant une ouverture dans laquelle l'extrémité de la tige de détection vient s'engager lorsqu'elle occupe la position de repos.

Selon encore une autre caractéristique de l'invention, la poignée comporte une encoche de réception de la jupe du couvercle au niveau de l'extrémité supérieure de la poignée, l'encoche étant adaptée pour permettre le passage des éléments de verrouillage du couvercle.

Selon encore une autre caractéristique de l'invention, le récipient est monté de manière amovible sur un boîtier renfermant le moteur, le boîtier comportant un socle sur lequel le récipient vient reposer.

Selon une autre caractéristique de l'invention, le dispositif de sécurité comporte une pièce de sécurité qui est amenée vers une position de sécurité par la tige de détection lorsque le récipient, muni de son couvercle en position fermée, est disposé sur le socle, la pièce de sécurité agissant sur un interrupteur pour n'autoriser le fonctionnement du moteur que lorsque la pièce de sécurité occupe la position de sécurité.

Selon encore une autre caractéristique de l'invention, la pièce de sécurité comporte au moins deux cames de détection débouchant en deux endroits distincts du socle du boîtier.

Une telle caractéristique permet l'actionnement de la pièce de sécurité lorsque le récipient occupe deux positions distinctes sur le boîtier.

Selon une autre caractéristique de l'invention, le couvercle comporte une partie centrale et une couronne périphérique réalisées dans des matériaux différents, la couronne intégrant la jupe du couvercle.

Une telle caractéristique permet de réaliser la couronne du couvercle, venant au contact du récipient, dans un matériau distinct de celui utilisé pour la partie centrale afin d'assurer un meilleur glissement du couvercle lors de la rotation pour son verrouillage/déverrouillage.

Selon une autre caractéristique de l'invention, la partie centrale du couvercle est réalisée en matériau transparent ou translucide, avantageusement en matériau plastique de type SAN (copolymère styrène-acrylonitrile), et la couronne est réalisée en matériau opaque, avantageusement en matériau plastique de type ABS (acrylonitrile butadiène styrène).

Selon une autre caractéristique de l'invention, la couronne est assemblée par surmoulage sur la partie centrale du couvercle.

Une telle caractéristique permet de manière simple et économique de garantir un assemblage fiable de la couronne sur la partie centrale.

On comprendra mieux les buts, aspects et avantages de la présente invention, d'après la description donnée ci-après de plusieurs modes particuliers de réalisation de l'invention présentés à titre d'exemple non limitatif, en se référant aux dessins annexés dans lesquels :
- la figure 1 est une vue en perspective d'un appareil de préparation culinaire selon un premier mode particulier de réalisation de l'invention, le couvercle étant représenté désaccouplé du récipient ;
- la figure 2 est une vue en perspective du dessus du boîtier moteur de l'appareil de la figure 1 ;
- la figure 3 est une vue en perspective du dessous du récipient de l'appareil de la figure 1 fermé par son couvercle ;
- la figure 4 est une autre vue en perspective de l'appareil de la figure 1 ;
- les figures 5 et 6 sont respectivement des vues en coupe partielle, de côté, de l'appareil de la figure 1 démuni de son couvercle et avec le couvercle en position verrouillée;
- la figure 7 est une vue de dessus du récipient fermé par son couvercle ;
- la figures 8A et 8B sont des vues en coupe selon la ligne VIII-VIII de la figure 7 lorsque le couvercle est respectivement verrouillé et retiré du récipient ;
- la figure 9 est une vue en perspective du récipient de l'appareil de la figure 1 selon une variante de réalisation de l'invention.

Seuls les éléments nécessaires à la compréhension de l'invention ont été représentés. Pour faciliter la lecture des dessins, les mêmes éléments portent les mêmes références d'une figure à l'autre.

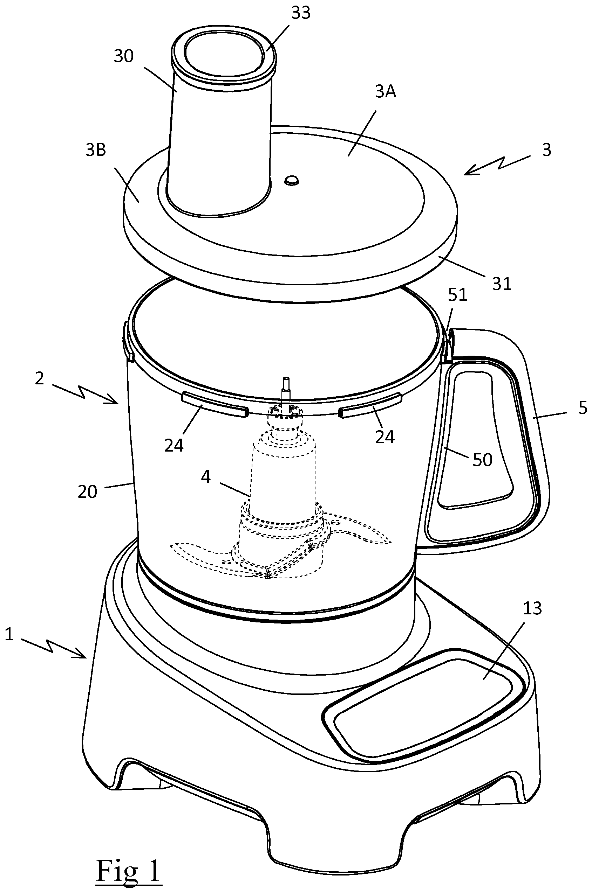

La figure 1 illustre un robot de préparation culinaire, notamment pour hacher ou trancher, comportant un boîtier 1 supportant un récipient 2 amovible comprenant une enveloppe 20 de section circulaire fermée à son extrémité supérieure par un couvercle 3 amovible, le récipient 2 recevant un outil de travail 4 rotatif, illustré en pointillé sur la figure 1, disposé dans le fond du récipient 2.

De manière préférentielle, le couvercle 3 comporte une goulotte d'alimentation 30 pour l'introduction d'aliments dans le récipient 2, recevant avantageusement un poussoir 33, et comprend une jupe 31 périphérique, s'étendant sur toute la circonférence du couvercle 3, venant recouvrir l'extrémité supérieure de l'enveloppe 20 du récipient. Le récipient 2 est avantageusement muni d'une poignée 5 de préhension comprenant une embase 50 de fixation s'étendant sensiblement verticalement le long de l'enveloppe 20, l'embase 50 comprenant une encoche 51 à son extrémité supérieure dans laquelle vient s'engager la jupe 31 du couvercle lorsque le couvercle 3 vient fermer le récipient 2.

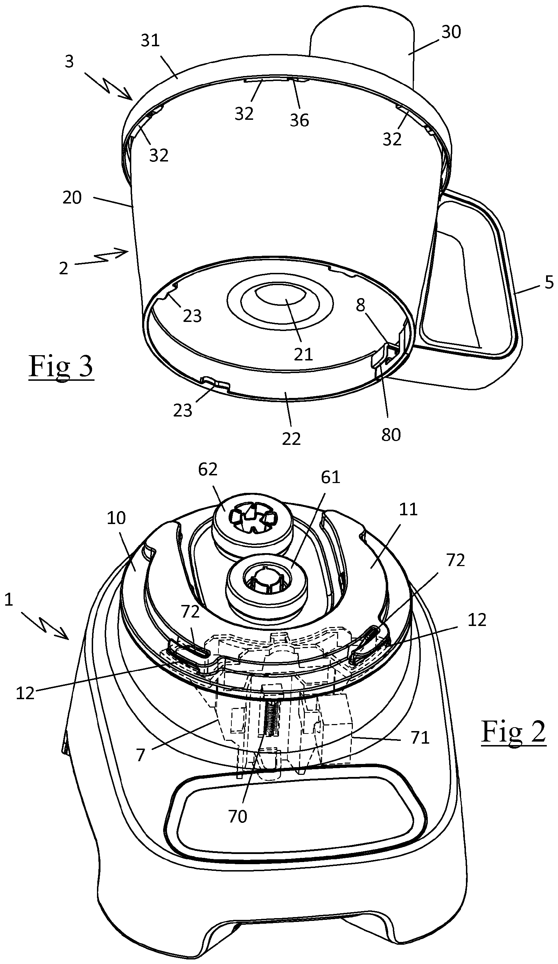

Conformément aux figures 2 et 3, le boîtier 1 comporte un socle 10 de réception circulaire, sur lequel le récipient 2 vient reposer, le socle 10 de réception comportant un entraîneur central 61 et un entraîneur excentré 62 entourés d'une empreinte de guidage 11 en forme de U.

Comme on peut le voir sur la figure 3, le récipient 2 comporte une cheminée centrale 21 s'étendant depuis le fond du récipient pour permettre, de manière connue en soi, l'accouplement de l'outil de travail 4 avec l'entraîneur central 61, et comporte une jupe 22 qui s'étend verticalement sous le fond du récipient 2 pour s'engager autour de l'empreinte de guidage 11 du socle 10 de réception, la jupe 22 comprenant une paroi interne supportant des ergots de verrouillage 23 venant s'engager dans des rainures 12 ménagées en bordure de l'empreinte de guidage pour réaliser une liaison de type baïonnette assurant la fixation du récipient 2 sur le boîtier 1.

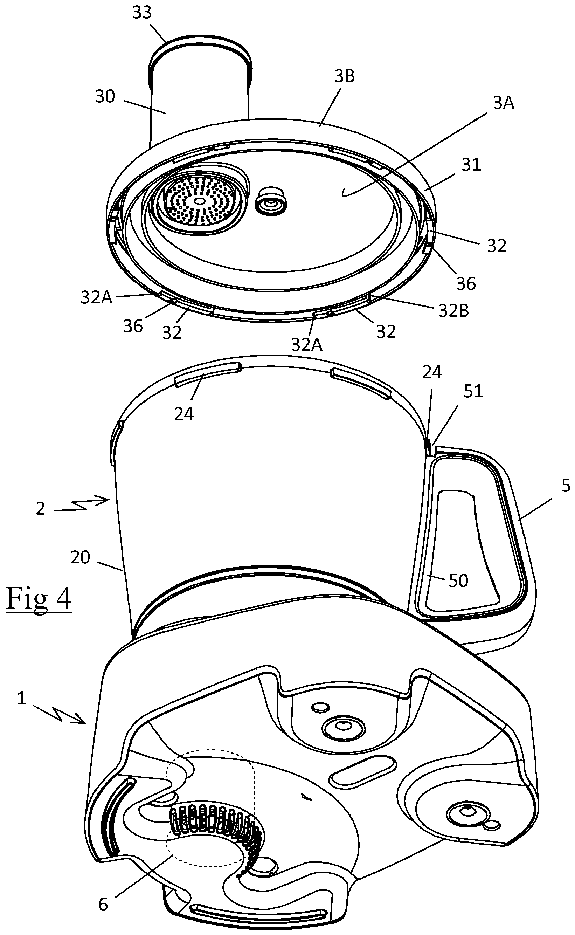

Le boîtier 1 renferme un moteur 6 électrique de type universel, représenté schématiquement en pointillé sur la figure 4, dont le fonctionnement est commandé par un tableau de commande 13 disposé sur la face avant du boîtier 1. La puissance du moteur 6 est avantageusement comprise entre 500W et 1100W et sa vitesse nominale est de l'ordre de 16000 tr/min, l'entraîneur excentré 62 étant préférentiellement monté directement sur l'arbre de sortie du moteur 6 électrique et l'entraîneur central 61 étant entraîné par l'intermédiaire d'un réducteur de vitesse assurant un réduction de la vitesse de plus de l'ordre de dix fois par rapport à la vitesse de rotation du moteur 6.

Conformément à la figure 2, l'appareil comporte un dispositif de sécurité empêchant le fonctionnement du moteur 6 lorsque le récipient n'est pas fermé par son couvercle, ce dispositif de sécurité comportant une pièce de sécurité 7, représentée en pointillé sur la figure 2, pouvant se déplacer verticalement dans le boîtier 1 à l'encontre d'un ressort 70 de rappel pour actionner un interrupteur 71 disposé sur le circuit d'alimentation du moteur 6.

De manière préférentielle, la pièce de sécurité 7 comporte deux cames 72 disposées à 90° l'une de l'autre par rapport au centre du socle 10, les deux cames 72 débouchant au travers de deux fentes ménagées dans l'empreinte de guidage 11.

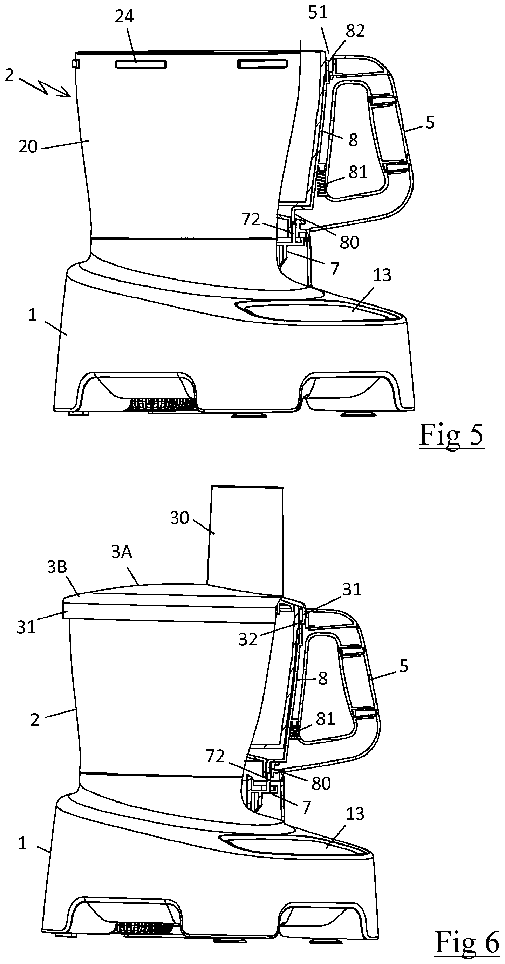

Le dispositif de sécurité comporte également une tige de détection 8, visible sur les figures 3 et 5, qui s'étend le long de la paroi externe du récipient 2, en étant disposée à l'intérieur d'une cavité ménagée dans l'embase de la poignée 5, la tige de détection 8 comportant une extrémité inférieure munie d'un doigt d'activation 80 venant en regard de l'une des cames 72 de la pièce de sécurité 7 lorsque le récipient 2 est verrouillé sur le socle 10, la présence des deux cames 72 sur le socle permettant la coopération de la tige de détection 8 avec la pièce de sécurité 7 lorsque le récipient est disposé sur le socle 10 avec la poignée 5 du récipient respectivement décalée de 45° vers la droite ou de 45° vers la gauche par rapport au tableau de commande 13.

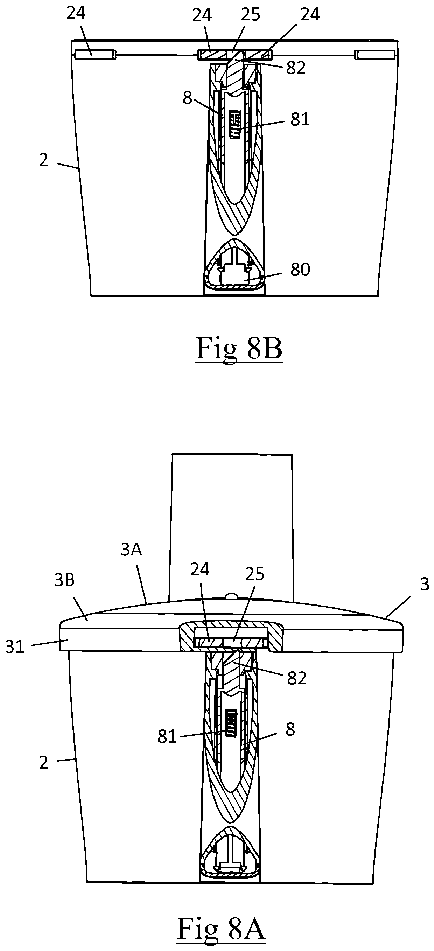

La tige de détection 8 est, de manière connue en soi, montée mobile en translation entre une position de repos, illustrée sur les figures 5 et 8B, dans laquelle le doigt d'activation 80 n'exerce pas de pression sur la came 72 de la pièce de sécurité 7 lorsque le récipient 2 est verrouillé sur le socle 10, et une position de fonctionnement, illustrée sur les figures 6 et 8A, dans laquelle le doigt d'activation 80 vient exercer une pression sur la came 72 pour amener la pièce de sécurité 7 dans une position de sécurité où elle actionne l'interrupteur 71 lorsque le récipient 2 est verrouillé sur le socle 10, la tige de détection 8 étant ramenée vers la position de repos par un ressort de rappel 81.

Conformément à la figure 4, le couvercle 3 est verrouillé sur le récipient 2 au moyen d'une liaison de type baïonnette comprenant avantageusement six nervures 32 de verrouillage en forme de L faisant saillie sur une paroi interne de la jupe 31, ces nervures 32 venant coopérer avec des nervures 24 de verrouillage complémentaires, de forme rectangulaire, ménagées sur la paroi externe du récipient 2, les six nervures 32 du couvercle et les six nervures 24 du récipient étant régulièrement réparties sur le couvercle 3 et sur le récipient 2 de manière à ce que le couvercle 3 puisse être verrouillé sur le récipient 2 selon six orientations distinctes.

De manière préférentielle, le couvercle 3 comporte une partie centrale 3A transparente réalisée par moulage en matériau plastique de type SAN, et une couronne 3B périphérique en matériau plastique ABS qui est surmoulée sur la partie centrale 3A, la couronne 3B intégrant notamment la jupe 31 du couvercle 3 et les nervures 32 du couvercle.

Comme on peut le voir sur les figures 8A et 8B, l'une des nervures 24 du récipient 2 est préférentiellement disposée en regard de la poignée 5, cette nervure 24 s'étendant au travers de l'encoche 51 formée à l'extrémité supérieure de la poignée 5 et présentant avantageusement une ouverture 25 en regard de la tige de détection 8 dans laquelle une extrémité supérieure 82 effilée de la tige de détection 8 peut s'engager lorsque la tige de détection 8 atteint la position de repos illustrée sur la figure 8B.

Comme on peut le voir sur les figures 3 et 4, les nervures 32 de verrouillage du couvercle 3 comprennent une surface inférieure qui vient préférentiellement affleurer le plan inférieur de la jupe 31, chaque nervure 32 comprenant une extrémité chanfreinée 32A facilitant l'engagement de la nervure 32 sous la nervure 24 du récipient lors de sa rotation dans le sens de la fermeture, et une extrémité opposée comprenant un retour de matière s'étendant verticalement vers l'intérieur du couvercle 3 pour former une butée 32B venant stopper la rotation du couvercle 3 en fin de course du verrouillage.

De manière préférentielle, la surface inférieure de chaque nervure 32 de verrouillage du couvercle 3 comporte une rainure 36 transversale apte à recevoir l'extrémité supérieure 82 de la tige de détection lorsque le couvercle est en fin de course de verrouillage.

Le verrouillage du couvercle et le fonctionnement du dispositif de sécurité qui lui est associé vont maintenant être décrits.

Lorsque l'utilisateur souhaite utiliser l'appareil, il place le couvercle 3 sur le récipient 2 sans se soucier de l'orientation du couvercle 3 par rapport au récipient 2, puis fait tourner le couvercle 3 dans le sens du verrouillage de manière à ce que, si ce n'est pas déjà fait, les nervures 32 du couvercle viennent s'engager entre les nervures 24 du récipient puis sous les nervures 24, empêchant ainsi tout soulèvement du couvercle 3.

La rotation du couvercle 3 est alors poursuivie de manière à ce que l'extrémité chanfreinée 32A de la nervure 32 du couvercle disposée au niveau de la poignée 5 vienne prendre appui sur un bord incliné de l'extrémité supérieure 82 de la tige de détection 8 et constitue un organe d'actionnement venant repousser la tige de détection 8 vers la position de fonctionnement, illustrée sur les figures 6 et 8A, dans laquelle la tige de détection 8 repousse la pièce de sécurité 7 dans la position de sécurité, la rotation du couvercle 3 étant stoppée en fin de course par les butées 32B dans une position de verrouillage dans laquelle l'extrémité supérieure 82 de la tige de détection 8 est engagée dans la rainure 36 transversale ménagée sur la surface inférieure de la nervure 32 du couvercle.

L'utilisateur peut alors faire fonctionner l'appareil en sélectionnant la commande désirée sur le tableau de commande 13, le fonctionnement du moteur 6 étant rendu possible par l'actionnement de l'interrupteur 71 par la pièce de sécurité 7.

Lors du fonctionnement de l'appareil, l'insertion de l'extrémité supérieure 82 de la tige de détection dans la rainure 36 transversale ménagée sur le couvercle 3 présente l'avantage d'immobiliser le couvercle en position de verrouillage, évitant ainsi un déverrouillage involontaire du couvercle 3, par exemple sous l'effet des vibrations engendrées par le fonctionnement de l'appareil.

Lorsque l'utilisateur souhaite ouvrir le couvercle 3, il lui suffit d'exercer sur le couvercle 3 un couple suffisant, dans le sens du déverrouillage, pour faire sortir l'extrémité supérieure 82 de la tige de détection 8 en dehors de la rainure 36, puis de poursuivre la rotation jusqu'à ce que les nervures 32 du couvercle s'échappent des nervures 24 du récipient 2, le couvercle 3 pouvant alors être soulevé sans difficulté.

Un tel appareil présente donc l'avantage d'être robuste, les nervures du couvercle venant agir sur la tige de détection se trouvant disposées à l'intérieur de couvercle en étant protégée des chocs par la présence de la jupe.

De plus, le couvercle d'un tel appareil présente l'avantage de posséder une bonne ergonomie d'utilisation, l'utilisateur n'ayant pas à se soucier de l'orientation du couvercle lorsqu'il souhaite le verrouiller sur le récipient, chacune des nervures du couvercle pouvant coopérer avec la tige de détection pour déplacer cette dernière vers la position de fonctionnement.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

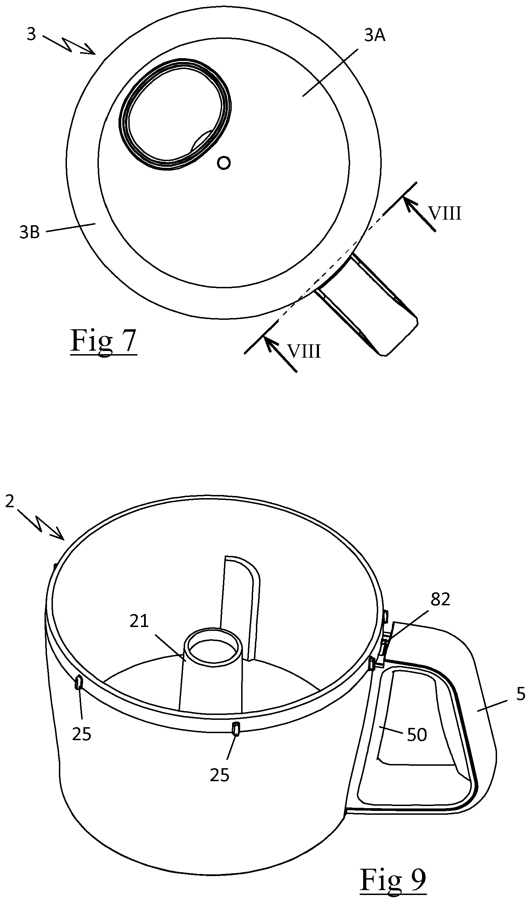

Ainsi, dans une variante de réalisation illustrée sur la figure 9, les nervures 24 de forme rectangulaire du récipient équipant l'appareil selon l'invention pourront être remplacées par des ergots 25 de verrouillage, d'une largeur de l'ordre de 2 mm, sous lesquels les nervures 32 de verrouillage du couvercle 3 viennent s'engager, les ergots 25 étant disposés sur la paroi externe du récipient de telle sorte qu'ils viennent en appui contre les butées 32B du couvercle 3 lorsque l'extrémité supérieure 82 de la tige de détection 8 se trouve engagée dans la rainure 36 de la nervure 32 du couvercle se trouvant en regard de la poignée 5.

Une telle variante de réalisation présente l'avantage de faciliter l'engagement du couvercle sur le récipient en offrant une plus grande plage angulaire où les nervures 32 du couvercle 3 peuvent s'engager entre les ergots 25 du récipient 2 préalablement à la rotation du couvercle 3 pour son verrouillage.

## Revendications

1. Appareil électroménager de préparation culinaire comportant un récipient (2) recevant un outil de travail (4) entraîné en rotation par un moteur (6) et un couvercle (3) venant fermer de manière amovible le récipient (2), le récipient (2) comportant un élément de détection (8) coopérant avec un dispositif de sécurité empêchant le fonctionnement du moteur (6) lorsque le couvercle (3) n'est pas verrouillé sur le récipient (2), ledit élément de détection (8) étant mobile entre une position de repos vers laquelle il est amené par des moyens de rappel (81) et une position de fonctionnement vers laquelle il est amené par un organe d'actionnement (32) porté par le couvercle (3) lorsque ce dernier est verrouillé par rotation sur le récipient (2), le couvercle (3) comportant une jupe (31) périphérique s'étendant sur toute la circonférence du couvercle (3), la jupe (31) comportant une paroi interne venant en regard d'une paroi externe du récipient (2) lorsque le couvercle vient fermer le récipient, ledit organe d'actionnement (32) faisant saillie sur la paroi interne de la jupe (31) du couvercle (3), **caractérisé en ce que** la paroi interne de la jupe (31) du couvercle (3) comporte au moins deux éléments de verrouillage (32) venant coopérer avec au moins deux éléments de verrouillage complémentaires (24) ménagés sur la paroi externe du récipient (2) pour former une liaison de type baïonnette, et **en ce que** ledit organe d'actionnement est constitué par l'un des éléments de verrouillage (32).

2. Appareil électroménager selon la revendication 1, **caractérisé en ce que** les éléments de verrouillage (32) sont régulièrement répartis sur la jupe (31) périphérique du couvercle de telle sorte que le couvercle (3) puisse être verrouillé sur le récipient (2) selon plusieurs orientations et **en ce que** chaque élément de verrouillage (32) du couvercle présente une forme adaptée pour agir sur l'élément de détection (8) et le déplacer vers la position de fonctionnement lorsqu'il se trouve en regard de ce dernier lors de la fermeture du couvercle (3).

3. Appareil électroménager selon la revendication 2, **caractérisé en ce que** le couvercle comporte au moins quatre éléments de verrouillage (32) et préférentiellement six éléments de verrouillage (32).

4. Appareil électroménager selon l'une quelconque des revendications 1 à 3, **caractérisé en ce que** le récipient (2) comporte une poignée (5) comprenant une embase (50) venant se fixer le long de la paroi externe du récipient (2), l'élément de détection (8) étant constitué par une tige de détection montée mobile en translation dans l'embase de la poignée (5).

5. Appareil électroménager selon la revendication 4, caractérisé en ce ladite poignée (5) comporte une encoche (51) de réception de la jupe (31) du couvercle au niveau de l'extrémité supérieure de la poignée (5), l'encoche étant adaptée pour permettre le passage des éléments de verrouillage (32) du couvercle (3).

6. Appareil électroménager selon l'une quelconque des revendications 1 à 5, **caractérisé en ce que** le récipient (2) est monté de manière amovible sur un boîtier (1) renfermant le moteur, le boîtier (1) comportant un socle (10) sur lequel le récipient (2) vient reposer.

7. Appareil électroménager selon la revendication 6, **caractérisé en ce que** le dispositif de sécurité comporte une pièce de sécurité (7) qui est amenée vers une position de sécurité par la tige de détection (8) lorsque le récipient (2), muni de son couvercle (3) en position fermée, est disposé sur le socle (10), ladite pièce de sécurité (7) agissant sur un interrupteur (71) pour n'autoriser le fonctionnement du moteur (6) que lorsque la pièce de sécurité (7) occupe la position de sécurité.

8. Appareil électroménager selon la revendication 7, **caractérisé en ce que** la pièce de sécurité (7) comporte au moins deux cames (72) de détection débouchant en deux endroits distincts du socle (10) du boîtier (1).

9. Appareil électroménager selon l'une quelconque des revendications 1 à 8, **caractérisé en ce que** le couvercle (3) comporte une partie centrale (3A) et une couronne (3B) périphérique réalisées dans des matériaux différents, la couronne (3B) intégrant la jupe (31) du couvercle.

10. Appareil électroménager selon la revendication 9, **caractérisé en ce que** la partie centrale (3A) du couvercle est réalisée en matériau transparent ou translucide, avantageusement en matériau plastique de type SAN (copolymère styrène-acrylonitrile), et la couronne (3B) est réalisée en matériau opaque, avantageusement en matériau plastique de type ABS (acrylonitrile butadiène styrène).

11. Appareil électroménager selon l'une quelconque des revendications 9 à 10, **caractérisé en ce que** la couronne (3B) est assemblée par surmoulage sur la partie centrale (3A) du couvercle (3).

## Patentansprüche

1. Elektrisches Haushaltsgerät zur Nahrungsmittelzubereitung, aufweisend einen Behälter (2), in dem ein Arbeitswerkzeug (4) aufgenommen ist, das von einem Motor (6) in Rotation angetrieben wird, und eine Abdeckung (3), die den Behälter (2) abnehmbar verschließt, wobei der Behälter (2) ein Erfassungselement (8) aufweist, das mit einer Sicherheitsvorrichtung zusammenwirkt, die den Betrieb des Motors (6) verhindert, wenn die Abdeckung (3) nicht auf dem Behälter (2) verriegelt ist, wobei das Erfassungselement (8) zwischen einer Ruheposition, in die es durch Rückstellmittel (81) gebracht wird, und einer Betriebsposition bewegbar ist, in die es durch ein Betätigungsorgan (32) gebracht wird, das von der Abdeckung (3) getragen wird, wenn die letztere durch Drehung auf dem Behälter (2) verriegelt ist, wobei die Abdeckung (3) eine umlaufende Schürze (31) aufweist, die sich über den gesamten Umfang der Abdeckung (3) erstreckt, wobei die Schürze (31) eine Innenwand aufweist, die einer Außenwand des Behälters (2) zugewandt ist, wenn die Abdeckung den Behälter verschließt, wobei das Betätigungsorgan (32) über der Innenwand der Schürze (31) der Abdeckung (3) hervorsteht, **dadurch gekennzeichnet, dass** die Innenwand der Schürze (31) der Abdeckung (3) mindestens zwei Verriegelungselemente (32) aufweist, die mit mindestens zwei komplementären Verriegelungselementen (24) zusammenwirken, die auf der Außenwand des Behälters (2) aufgenommen sind, um eine Verbindung vom Bajonetttyp zu bilden, und dass das Betätigungsorgan aus einem der Verriegelungselemente (32) besteht.

2. Elektrisches Haushaltsgerät nach Anspruch 1, **dadurch gekennzeichnet, dass** die Verriegelungselemente (32) gleichmäßig über die umlaufende Schürze (31) der Abdeckung verteilt sind, so dass die Abdeckung (3) in mehreren Orientierungen auf dem Behälter (2) verriegelt werden kann, und dass jedes Verriegelungselement (32) der Abdeckung eine Form aufweist, die angepasst ist, um auf das Erfassungselement (8) einzuwirken und es in die Betriebsposition zu bewegen, wenn es sich gegenüber der letzteren während des Schließens der Abdeckung (3) befindet.

3. Elektrisches Haushaltsgerät nach Anspruch 2, **dadurch gekennzeichnet, dass** die Abdeckung mindestens vier Verriegelungselemente (32) und vorzugsweise sechs Verriegelungselemente (32) aufweist.

4. Elektrisches Haushaltsgerät nach einem der Ansprüche 1 bis 3, **dadurch gekennzeichnet, dass** der Behälter (2) einen Griff (5) aufweist, der ein Unterteil (50) umfasst, das entlang der Außenwand des Behälters (2) befestigt ist, wobei das Erfassungselement (8) aus einer Erfassungsstange besteht, die in dem Unterteil des Griffs (5) translationsbeweglich angebracht ist.

5. Elektrisches Haushaltsgerät nach Anspruch 4, **dadurch gekennzeichnet, dass** der Griff (5) eine Kerbe (51) zur Aufnahme der Schürze (31) der Abdeckung an dem oberen Ende des Griffs (5) aufweist, wobei die Kerbe angepasst ist, um den Durchgang der Verriegelungselemente (32) der Abdeckung (3) zu ermöglichen.

6. Elektrisches Haushaltsgerät nach einem der Ansprüche 1 bis 5, **dadurch gekennzeichnet, dass** der Behälter (2) an einem den Motor umschließenden Gehäuse (1) lösbar angebracht ist, wobei das Gehäuse (1) einen Sockel (10) aufweist, auf dem der Behälter (2) aufliegt.

7. Elektrisches Haushaltsgerät nach Anspruch 6, **dadurch gekennzeichnet, dass** die Sicherheitsvorrichtung ein Sicherheitsteil (7) aufweist, das durch den Erfassungsstab (8) in eine Sicherheitsposition gebracht wird, wenn der Behälter (2), der mit seiner Abdeckung (3) in der geschlossenen Position versehen ist, auf dem Sockel (10) angeordnet ist, wobei das Sicherheitsteil (7) auf einen Schalter (71) einwirkt, um den Betrieb des Motors (6) nur dann zu ermöglichen, wenn das Sicherheitsteil (7) die Sicherheitsposition einnimmt.

8. Elektrisches Haushaltsgerät nach Anspruch 7, **dadurch gekennzeichnet, dass** das Sicherheitsteil (7) mindestens zwei Erfassungsnocken (72) aufweist, die an zwei verschiedenen Stellen des Sockels (10) des Gehäuses (1) münden.

9. Elektrisches Haushaltsgerät nach einem der Ansprüche 1 bis 8, **dadurch gekennzeichnet, dass** die Abdeckung (3) einen mittleren Abschnitt (3A) und einen aus verschiedenen Materialien hergestellten umlaufenden Ring (3B) aufweist, wobei in dem Ring (3B) die Schürze (31) der Abdeckung integriert ist.

10. Elektrisches Haushaltsgerät nach Anspruch 9, **dadurch gekennzeichnet, dass** der mittlere Abschnitt (3A) der Abdeckung aus transparentem oder durchscheinendem Material, vorteilhafterweise aus einem Kunststoffmaterial vom Typ SAN (Styrol-Acrylnitril-Copolymer), hergestellt ist, und dass der Ring (3B) aus opakem Material, vorteilhafterweise einem Kunststoffmaterial vom Typ ABS (Acrylnitril-Butadien-Styrol) hergestellt ist.

11. Elektrisches Haushaltsgerät nach einem der Ansprüche 9 bis 10, **dadurch gekennzeichnet, dass** der Ring (3B) durch Umspritzen an dem mittleren Abschnitt (3A) der Abdeckung (3) angefügt ist.

## Claims

1. Household electrical appliance for preparing food comprising a container (2) receiving a work tool (4) driven in rotation by a motor (6) and a cover (3) coming to close the container (2) so as it can be removed, the container (2) comprising a detection element (8) cooperating with a safety device preventing the functioning of the motor (6) when the cover (3) is not locked on the container (2), said detection element (8) being mobile between a rest position towards which it is brought by the return means (81) and a functioning position towards which it is brought by an actuation member (32) supported by the cover (3) when the latter is locked by rotating on the container (2), the cover (3) comprising a sleeve (31) extending over the whole circumference of the cover (3), the sleeve (31) comprising an inner wall coming opposite an outer wall of the container (2) when the cover comes to close the container, said actuation member (32) protruding over the inner wall of the sleeve (31) of the cover (3), **characterised in that** the inner wall of the sleeve (31) of the cover (3) comprises at least two locking elements (32) coming to cooperate with at least two additional locking elements (24) provided on the outer wall of the container (2) to form a bayonet-type connection, and **in that** said actuation member is constituted by one of the locking elements (32).

2. Household electrical appliance according to claim 1, **characterised in that** the locking elements (32) are regularly distributed over the peripheral sleeve (31) of the cover such that the cover (3) can be locked on the container (2) according to several orientations and **in that** each locking element (32) of the cover has an adapted shape to act on the detection element (8) and move it towards the functioning position when it is situated opposite the latter during the closing of the cover (3).

3. Household electrical appliance according to claim 2, **characterised in that** the cover comprises at least four locking elements (32) and preferably six locking elements (32).

4. Household electrical appliance according to any one of claims 1 to 3, **characterised in that** the container (2) comprises a handle (5) comprising a base (50) coming to be secured along the outer wall of the container (2), the detection element (8) being constituted by a detection rod mounted moving forward into the base of the handle (5).

5. Household electrical appliance according to claim 4, **characterised in that** said handle (5) comprises a groove (51) for receiving the sleeve (31) of the cover at the level of the upper end of the handle (5), the groove being adapted to enable the passage of locking elements (32) of the cover (3).

6. Household electrical appliance according to any one of claims 1 to 5, **characterised in that** the container (2) is mounted so that it can be removed on a casing (1) containing the motor, the casing (1) comprising a base (10) on which the container (2) comes to rest.

7. Household electrical appliance according to claim 6, **characterised in that** the safety device comprises a safety part (7) which is brought towards a safety position by the detection rod (8) when the container (2), equipped with the cover (3) thereof in a closed position, is arranged on the base (10), said safety part (7) acting on a switch (71) to only enable the functioning of the motor (6) when the safety part (7) occupies the safety position.

8. Household electrical appliance according to claim 7, **characterised in that** the safety part (7) comprises at least two detection cams (72) leading to two separate places of the base (10) of the casing (1).

9. Household electrical appliance according to any one of claims 1 to 8, **characterised in that** the cover (3) comprises a central part (3A) and a peripheral crown (3B) made from different materials, the crown (3B) integrating the sleeve (31) of the cover.

10. Household electrical appliance according to claim 9, **characterised in that** the central part (3A) of the cover is made of transparent or translucent material, advantageously of SAN-type plastic material (styrene-acrylonitrile copolymer), and the crown (3B) is made of opaque material, advantageously of ABS-type plastic material (acrylonitrile butadiene styrene).

11. Household electrical appliance according to any one of claims 9 to 10, **characterised in that** the crown (3B) is assembled by overmoulding on the central part (3A) of the cover (3).
